# EUROPEAN PATENT SPECIFICATION

(11) **EP 3 682 529 B1**
(45) Date of publication and mention of the grant of the patent: **23.10.2024**
(21) Application number: 18765597.2
(22) Date of filing: 31.08.2018
(51) Int. Cl.: H02K 1/18, H02K 5/16, H02K 7/116

(54) **WIPER MOTOR AND METHOD FOR ITS ASSEMBLY**
WISCHERMOTOR UND MONTAGEVERFAHREN EINES WISCHERMOTORS
MOTEUR ESSUIE-GLACE ET MÉTHODE D'ASSEMBLAGE

(30) Priority: 13.09.2017 DE 102017121217
(43) Date of publication of application: 22.07.2020
(73) Proprietor: Valeo Systèmes d'Essuyage, 78322 Le Mesnil Saint Denis (FR)
(72) Inventor: SCHAEUBLE, Michael, 74321 Bietigheim-Bissingen (DE); KAPITZA, Harald, 74321 Bietigheim-Bissingen (DE)
(74) Representative: Valeo Visibility
(86) International application number: PCT/EP2018/073439
(87) International publication number: WO 2019/052834

(56) References cited:
- WO-A1-2014/061156
- JP-A- 2017 070 207
- US-A1- 2009 189 492
- US-A1- 2016 056 686

## Description

### Prior art

The invention relates to a brushless electric motor according to claim 1. Moreover, the invention relates to a method for the assembly of an electric motor according to claim 13.

A brushless electric motor of this kind is already known in practice. It comprises a rotor which is rotationally mounted and carries magnetic elements, which interacts with a stator arranged stationary in a housing of the electric motor. The stator comprises several wire windings, which are actuated or energized depending on the rotation angle position of the rotor, in order to drive the rotor. Furthermore, such an electric motor typically has a gearing on one section of a shaft of the rotor, which meshes with a gear wheel in order to drive a driven element of the electric motor. This driven element serves, for example in a windscreen wiper motor, for the at least indirect moving of a windscreen wiper or a wiping rod. For the installing of the rotor in the housing of the electric motor it is provided that this is positioned or fixed in the housing in the axial direction, i.e., the direction of the rotary axis of the rotor. For this purpose, bow-shaped securing elements are known in the prior art, which can be inserted into a recess of the housing and at the same time interact with, for example, a bearing device of the rotor, so that the bearing device and hence also the rotor are axially positioned in the housing. Furthermore, it is also required to secure the stator in the housing during the assembly or to position it in an axial position. This is performed in the prior art by a separate assembly step from the positioning or securing of the rotor.

WO 2014/061156 A1 discloses an electric motor with a rotor secured coaxially to a rotating shaft, a cylindrical stator surrounding the rotor on the diametric interior thereof; and a bearing holding part provided coaxially with the stator and integrally on each of the end faces thereof, the bearing holding part holding a bearing of the rotation axis from either side.

### Disclosure of the invention

The brushless electric motor with the features of claim 1 has the advantage that, by its design configuration, the axial securing and positioning of both the rotor and the stator is performed in a single common assembly step using one and the same securing element. For this, it is provided that the securing element, designed to position and secure the rotor, is configured to additionally position the stator axially in the housing in the direction of the rotary axis of the rotor.

Advantageous modifications of the brushless electric motor according to the invention are set forth in the dependent claims.

The interworking of the stator with the securing element for the axial positioning of the stator occurs preferably by a positioning portion, which interacts with the securing element. In particular, it is provided that the positioning portion cooperates with the securing element by means of a form-fit connection. Such a configuration also makes it possible, in particular, to dispense with additional elements or components to connect the securing element to the positioning portion.

Usually the arrangement of the securing element for the axial positioning or securing of the rotor is dictated by the design. In order to avoid having to make any change to the installing location of the securing element in this regard and also to avoid having to make any change to the disposition of the stator with respect to the rotor, it is furthermore provided, according to the invention, that the positioning portion axially protrudes beyond a coil region of the stator in the direction of a longitudinal axis of the stator in the direction of the securing element, which coil region comprises wire windings.

In another preferred design embodiment of the electric motor which is optimized in terms of the assembly process, it is proposed that the stator is arranged in a motor housing, that the motor housing can be connected to a second face side of a gear housing on a first face side, wherein the motor housing forms the housing of the electric motor together with the gear housing, that the gear housing comprises a cutout into which the positioning portion can be axially inserted in the direction of the rotary axis of the rotor, and that the cutout extends all the way into the region of a recess for receiving the securing element. Such a configuration makes it possible, when joining the components of the electric motor, to introduce the stator by its positioning portion into the cutout of the gear housing until the positioning portion comes to overlap axially with the securing element.

An assembly of the securing element, which can be performed especially easily in particular manually, provides that the securing element can be inserted into the recess in a direction running perpendicular to the rotary axis of the rotor. Such a configuration furthermore has the advantage that, for example a cover spanning the gear housing in the area of the recess for the securing element holds or secures the cover of the securing element in its position, so that no additional fastening elements are required for the securing element in the form of separate components either.

In a preferred design embodiment of the positioning portion and the securing element interacting with the positioning portion, it is provided that the positioning portion of the stator comprises a groove in which a protrusion of the securing element engages.

In order to fulfil the dual function of the securing element in terms of the positioning and the fixation of both the rotor and the stator, in one geometrically advantageous configuration of the securing element it is provided that, in a plane running perpendicular to the rotary axis of the rotor, the securing element is of U-shaped design with a cut-out for receiving a shaft of the rotor and it comprises an arresting section for cooperating with the positioning portion.

The positioning portion is formed in particular on an extension of the stator, wherein the extension extends parallel to the longitudinal axis of the stator, and the securing element comprises a protrusion which carries the arresting section.

It is most especially preferred that the stator together with the extension forms a monolithic injection molding. This affords an especially economical way of fabricating both the stator and the extension not requiring additional assembly expense.

The securing element serves, as is known in the prior art, for the axial positioning of the rotor in the housing of the electric motor. With the aid of the securing element, an axial force is exerted on a bearing device of the rotor, which is firmly connected to the shaft of the rotor in the axial direction, which applies force to the bearing device and hence to the rotor in a defined direction of the housing. For the applying of such an axial or biasing force to the bearing element it is advantageous for the securing element to consist of a spring steel sheet and to be formed as a punched or bent part. On account of being formed as a spring metal sheet, its configuration can be curved, for example, so that owing to its shape and the introducing of the securing element into a seat of the housing, the securing element can act with an axial biasing force on the bearing device.

As is known, the stator has wire windings which need to be energized in order to drive the rotor. Another preferred design embodiment with a view to the possible contacting of the wire windings provides that the extension comprises ports for electrically contacting electric coils (wire windings) located in the stator. Such an embodiment further makes it possible to situate the location of the electrical contacting of the coils or wire windings by way of the extension in a region which is distant from the actual stator or wire windings.

An electric motor so described according to the invention in one preferred application is part of a wiper motor, which drives at least indirectly a windscreen wiper.

Furthermore, the invention also involves a method for mounting an electric motor as described according to the invention. This mounting includes at least the following steps: first of all, mounting the stator and the rotor in the motor housing of the electric motor. Next, axially joining the motor housing and the gear housing, wherein a portion of the rotor and the positioning portion of the stator protrude into the gear housing. Lastly, mounting the securing element, wherein the rotor and the positioning portion are positioned axially relative to the motor housing and the gear housing.

Further advantages, features and details of the invention will emerge from the following description of preferred exemplary embodiments as well as with the aid of the drawing.

There are shown:
- Fig. 1: the major components of a brushless electric motor according to the invention in a partly sectioned exploded view,
- Fig. 2: a partly sectioned representation of the mounted electric motor of Fig. 1,
- Fig. 3: a detail of Fig. 2 in the region of a securing element in top view,
- Fig. 4: the region of Fig. 3 in a perspective representation,
- Fig. 5: a perspective representation of the electric motor of Fig. 1 and 2 to explain the assembly process for a securing element,
- Fig. 6: a partial cross section in the region of the securing element of the electric motor and
- Fig. 7: a cross section through the electric motor in the region of the securing element with major components.

The same elements or elements with the same function are given the same reference numbers in the figures.

The figures show a brushless electric motor 10, which serves as a wiper motor 100 for at least indirect moving or driving of at least one windscreen wiper in a vehicle, not shown in the figures. The electric motor 10 comprises a housing 12, which consists of a typically multiple-piece gear housing 14 made of plastic in particular and a motor housing 16 which can be flanged onto the gear housing 14, especially of cup shape, and shown in section view in the figures. The connection between the gear housing 14 and the motor housing 16 occurs in the area of two opposite face sides 17, 18 of the gear housing 14 and the motor housing 16 in the region of flangelike sections, for example by fastening elements such as fastening screws (not shown) or by a locking connection.

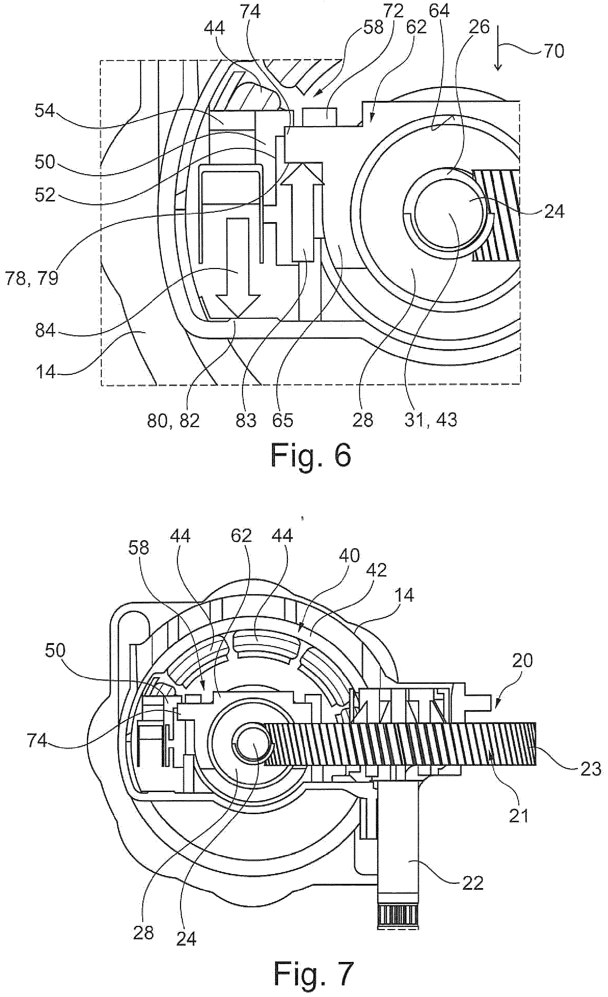

Inside the gear housing 14 there is arranged a gear 20, being a single-stage gear in the exemplary embodiment, with a gear wheel 21. The gear wheel 21, rotationally mounted in one axle in the gear housing 14, acts on a driven element 22 (Fig. 7) in the form of a driven shaft, which for example interacts directly with a windscreen wiper or with a wiper rod. The gear wheel 21 has on its outer circumference a gearing 23 in the form of a helical gearing, which meshes with a worm gearing 26 formed on one section of a shaft 24 of a rotor 25.

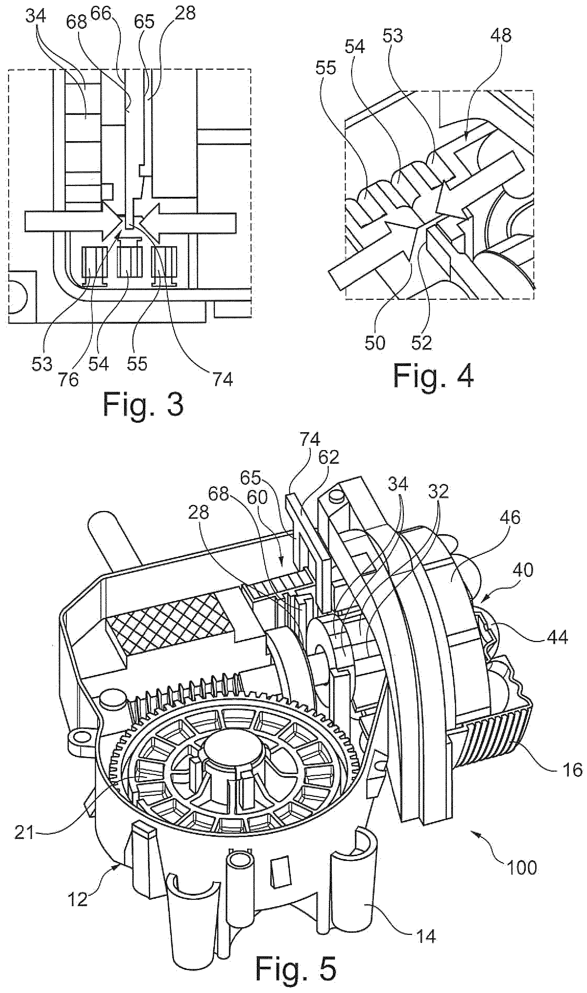

The rotor 25 is rotationally mounted inside the housing 12 for example by means of two bearing devices 28, 30, the two bearing devices 28, 30 being arranged in a fixed position on the shaft 24 of the rotor 25 in the direction of the rotary axis 31 of the rotor 25. The rotor 25 furthermore, as is also known in the prior art, has first magnetic elements 32 (Fig. 5) on its outer circumference for interacting with a stator 40 and second magnetic elements 34 as part of a Hall sensor for detecting the rotary angle position of the rotor 25, the magnetic elements 32, 34 being arranged at an axial spacing from each other in regard to the rotary axis 31 of the rotor 25 or being adjacent to each other (Fig. 5).

The rotor 25 is enclosed by the stator 40, fixed in place in the housing 12, coaxially to the rotary axis 31. The stator 40 has a carrier element 42 made of plastic in an injection molding process, being adapted to receiving several wire windings 44 to form coils in the circumferential direction about a longitudinal axis 43 of the carrier element 42, which is aligned with the rotary axis 31. Furthermore, the carrier element 42 is enclosed in a central region by a back yoke ring 46 made of ferromagnetic material.

In the state of the stator 40 installed in the housing 12, the wire windings 44 interact with the first magnetic elements 32 of the rotor 25, the first magnetic elements 32 being arranged in particular centrally in regard to the axial extension of the wire windings 44 in the direction of the longitudinal axis 43. Furthermore, the carrier element 42 comprises an extension 48 protruding axially beyond the region of the wire windings 44 in the direction towards the gear housing 14, which is monolithically moulded on the carrier element 42. The extension 48 runs substantially parallel to the longitudinal axis 43 of the carrier element 42 and has, at the side facing towards the longitudinal axis 43, a positioning portion 50 with a groove 52 arranged perpendicular to the longitudinal axis 43 (Fig. 4). Furthermore, in the area of the extension 48, as is best seen from Fig. 3 and 4, there are arranged for example three electrical connectors in the form of contact elements 53 to 55 made of spring metal sheets, which are electrically connected to the wire windings 44. Owing to the contact elements 53 to 55, an energization or contacting of the wire windings 44 can occur by mating elements, not shown, for example in the form of plugs which interact with the contact elements 53 to 55. For example, it may be provided in this case that the contacting of the contact elements 53 to 55 occurs by an additional cover element of the gear housing 14, which carries the mating contacts and which, when connected to the gear housing 14, automatically comes into operative connection with the contact elements 53 to 55.

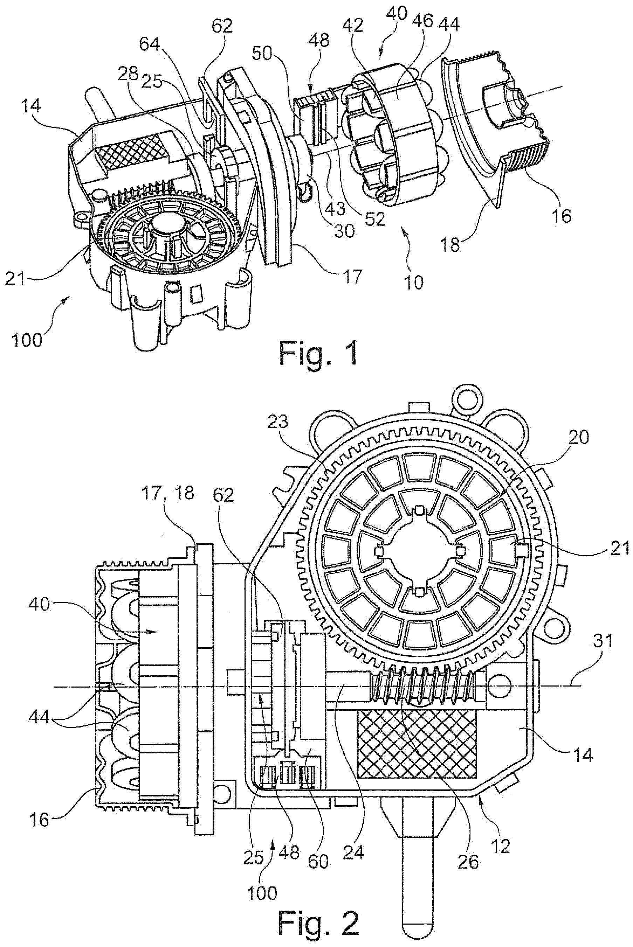

As is best seen from Fig. 2, the extension 48 protrudes axially into the gear housing 14. For this, the gear housing 14 has a recess 58 (Fig. 6, 7), which surrounds the extension 48 with a clearance when an axial joint is produced between the stator 40 or the motor housing 16 containing the stator 40 and the gear housing 14. In the condition shown in Fig. 2 joined between the stator 40 and the gear housing 14, the extension 48 is arranged with the region of the groove 52 and the contact elements 53 to 55 in the region of an additional recess 60 of the gear housing 14.

The positioning portion 50 or the groove 52 interact with a securing element 62 made of spring sheet metal. The securing element 62, as is especially recognizable when viewing Fig. 1 together with Fig. 6, has a U-shaped cutout 64 for receiving the shaft 24. The securing element 62 interacts by one face side 65 with an end surface of the one bearing device 28 facing towards it, and by its other face side 66 with a wall 68, forming an axial end stop, formed in the region of the other recess 60 in the gear housing 14 (Fig. 3, 5). The securing element 62, which is fashioned as a punched or bent part, is preferably somewhat curved or bent, so that when the securing element 62 is introduced axially in the direction of the installation direction 70, running perpendicular to the rotary axis 31 of the rotor 25 (Fig. 6), the two face sides 65, 66 of the securing element 62 exert an axial force on the bearing device 28 and hence on the rotor 25 in the direction of the rotary axis 31, which position the rotor 25 in an axial nominal position in relation to the housing 12. Furthermore, the securing element 62, as is especially visible with the aid of Fig. 6, has a protrusion 72 with an arresting section 74 in the direction of the extension 48. The arresting section 74 is adapted to produce a form fit connection 76 with the groove 52 on the positioning portion 50 at the same time when the securing element 62 is assembled on the rotor 25.

If the groove 52, as can be seen from Fig. 6, does not run along the entire extent of the extension 48, but instead has a shoulder 78, then when the arresting section 74 is placed against the shoulder 78 a first end stop 79 is formed, which together with a second end stop 80, which is formed between the extension 48 and a bottom region 82 of the other recess 60, as per the arrows 83, 84, brings about a locking of the extension 48 and hence the stator 40 not only in the direction of the rotary axis 31, but also a fixed rotary angular arrangement of the stator 40 relative to the housing 12.

For the assembly of the electric motor 10, the stator 40 and the rotor 25 are mounted in the motor housing 16, with the stator 40 protruding at least by the region of its extension 48 and the rotor 25 for a portion from the motor housing 16. After this, an axial joining is performed for the motor housing 16 and the gear housing 14, so that the components of the stator 40 and the rotor 25 protruding from the motor housing 16 end up in the region of the gear housing 14. When the axial joining between the gear housing 14 and the motor housing 16 is completed, (optionally after a fastening of the motor housing 16 to the gear housing 14) the securing element 62 is introduced in the direction of the installation direction 70 into the region of the further recess 60, while at the same time both the rotor 25 and the stator 40 are positioned in the longitudinal direction, i.e., in the direction of the rotary axis 31 or the longitudinal axis 43 with respect to the housing 12. After this, further assembly steps are performed to finish or complete the electric motor 10 or the wiper motor 100.

The electric motor 10 thus described can be altered or modified in many ways without deviating from the invention as defined in the appended claims.

### List of reference numbers

- 10: Electric motor
- 12: Housing
- 14: Gear housing
- 16: Motor housing
- 17: Face side
- 18: Face side
- 20: Gear
- 21: Gear wheel
- 22: Driven element
- 23: Gearing
- 24: Shaft
- 25: Rotor
- 26: Worm gearing
- 28: Bearing device
- 30: Bearing device
- 31: Rotary axis
- 32: First magnetic element
- 34: Second magnetic element
- 40: Stator
- 42: Carrier element
- 43: Longitudinal axis
- 44: Wire winding
- 46: Back yoke ring
- 48: Extension
- 50: Positioning portion
- 52: Groove
- 53: Contact element
- 54: Contact element
- 55: Contact element
- 58: Recess
- 60: Recess
- 62: Securing element
- 64: Cutout
- 65: Face side
- 66: Face side
- 68: Wall
- 70: Installation direction
- 72: Protrusion
- 74: Arresting section
- 76: Form fit connection
- 78: Shoulder
- 79: First end stop
- 80: Second end stop
- 82: Bottom region
- 83: Arrow
- 84: Arrow

- 100: Wiper motor

## Claims

1. Brushless electric motor (10), having a housing (12) for receiving a rotor (25) rotatably supported in a rotary axis (31) by means of multiple bearing means (28, 30), wherein magnetic elements (32) are arranged on the rotor (25), which interact with a stator (40) stationary arranged in the housing (12), and wherein the rotor (25) is positioned in the housing (12) axially in the direction of the rotary axis (31) by means of a securing element (62) connectable with the housing (12),
**characterized in that**
the stator (40) comprises a positioning portion (50) cooperating with the securing element (62) and the positioning portion (50) axially protrudes beyond a carrier element (42) of the stator (40) in the direction of the rotary axis (31),
which carrier element (42) carries coil windings (44),
the securing element (62) serving for the axial positioning of the rotor (25) in the housing (12), said securing element (62) exerting an axial force on the bearing means (28) of the rotor (25),
wherein the bearing means (28) is firmly connected to a shaft (24) of the rotor (25) in the axial direction, wherein the securing element (62) applies force to the bearing means (28) and hence to the rotor (25) in the direction of the rotary axis (31),
wherein the positioning portion (50) interacts with the securing element (62) so as to additionally position the stator (40) in the housing (12) axially in the direction of the rotary axis (31).

2. Electric motor according to claim 1,
**characterized in that**
the positioning portion (50) cooperates with the securing element (62) by means of a form-fit connection (76).

3. Electric motor according to claim 2,
**characterized in that**
the stator (40) is arranged in a motor housing (16), **in that** the motor housing (16) can be connected to a second face side (17) of a gear housing (14) on a first face side (18), wherein the motor housing (16) forms the housing (12) together with the gear housing (14), **in that** the gear housing (14) comprises a recess (58) into which the positioning portion (50) can be axially inserted in the direction of the rotary axis (31), and **in that** the recess (58) extends all the way into a region of a further recess (60) for receiving the securing element (62).

4. Electric motor according to claim 3,
**characterized in that**
the securing element (62) can be inserted into the further recess (60) in a direction (70) running perpendicular to the rotary axis (31) of the rotor (25).

5. Electric motor according to claims 2 to 4,
**characterized in that**
the positioning portion (50) comprises a groove (52), into which a protrusion (72) of the securing element (62) engages.

6. Electric motor according to one of claims 2 to 5,
**characterized in that**
in a plane running perpendicular to the rotary axis (31) of the rotor (25), the securing element (62) is of U-shaped design with a cut-out (64) for receiving a shaft (24) of the rotor (25) and comprises an arresting section (74) for cooperating with the positioning portion (50).

7. Electric motor according to one of claims 3 to 6,
**characterized in that**
the positioning portion (50) is formed on an extension (48) of the stator (40), **in that** the extension (48) extends parallel to the longitudinal axis (43) of the stator (40), and **in that** the securing element (62) comprises a protrusion (72) which carries the arresting section (74).

8. Electric motor according to claim 7,
**characterized in that**
the stator (40) together with the extension (48) form a monolithic injection molding.

9. Electric motor according to one of claims 1 to 8,
**characterized in that**
the securing element (62) consists of a spring steel sheet and is formed as a punched or bent part.

10. Electric motor according to one of claims 3 to 9,
**characterized in that**
the securing element (62) acts against a bearing means (28) with a first face side (65) and with a wall (68) of the gear housing (14) with its opposite second face side (66).

11. Electric motor according to one of claims 7 to 10,
**characterized in that**
the extension (48) comprises ports (53 to 55) for electrically contacting electric coils located in the stator (40).

12. Electric motor according to one of Claims 1 to 11,
**characterized in that**
the electric motor (10) is part of a wiper motor (100).

13. Method for mounting an electric motor (10) configured according to one of claims 3 to 12, wherein the mounting includes at least the following steps:
- mounting the stator (40) and the rotor (25) in the motor housing (16),
- axially joining the motor housing (16) and the gear housing (14), wherein a portion of the rotor (25) and the positioning portion (50) of the stator (40) protrude into the gear housing (14),
- mounting the securing element (62), wherein the rotor (25) and the positioning portion (50) are positioned axially relative to the motor housing (16) and the gear housing (14).

## Patentansprüche

1. Bürstenloser Elektromotor (10) mit einem Gehäuse (12) zur Aufnahme eines Rotors (25), der mittels mehrerer Lagermittel (28, 30) drehbar um eine Drehachse (31) gelagert ist, wobei am Rotor (25) magnetische Elemente (32) angeordnet sind, die mit einem im Gehäuse (12) feststehend angeordneten Stator (40) zusammenwirken, und wobei der Rotor (25) im Gehäuse (12) axial in Richtung der Drehachse (31) mittels eines mit dem Gehäuse (12) verbindbaren Befestigungselements (62) positioniert ist, **dadurch gekennzeichnet, dass**
der Stator (40) einen mit dem Befestigungselement (62) zusammenwirkenden Positionierabschnitt (50) aufweist und der Positionierabschnitt (50) axial über ein Trägerelement (42) des Stators (40) in Richtung der Drehachse (31) hinausragt, wobei das Trägerelement (42) Spulenwicklungen (44) trägt, wobei das Befestigungselement (62) zur axialen Positionierung des Rotors (25) im Gehäuse (12) dient, wobei das Befestigungselement (62) ein Axialkraft auf das Lagermittel (28) des Rotors (25) ausübt, wobei das Lagermittel (28) in axialer Richtung fest mit einer Welle (24) des Rotors (25) verbunden ist, wobei das Befestigungselement (62) Kraft auf das Lagermittel (28) und damit auf den Rotor (25) in Richtung der Drehachse (31) ausübt, wobei der Positionierabschnitt (50) mit dem Befestigungselement (62) so zusammenwirkt, dass zusätzlich der Stator (40) im Gehäuse (12) axial in Richtung der Drehachse (31) positioniert wird.

2. Elektromotor nach Anspruch 1,
**dadurch gekennzeichnet, dass**
der Positionierabschnitt (50) mit dem Befestigungselement (62) mittels einer Formschlussverbindung (76) zusammenwirkt.

3. Elektromotor nach Anspruch 2,
**dadurch gekennzeichnet, dass**
der Stator (40) in einem Motorgehäuse (16) angeordnet ist, dass das Motorgehäuse (16) an einer ersten Stirnseite (18) mit einer zweiten Stirnseite (17) eines Getriebegehäuses (14) verbunden werden kann, wobei das Motorgehäuse (16) zusammen mit dem Getriebegehäuse (14) das Gehäuse (12) bildet, dass das Getriebegehäuse (14) eine Ausnehmung (58) aufweist, in die der Positionierabschnitt (50) in Richtung der Drehachse (31) axial einsetzbar ist, und dass sich die Ausnehmung (58) bis in einen Bereich einer weiteren Ausnehmung (60) zur Aufnahme des Befestigungselements (62) erstreckt.

4. Elektromotor nach Anspruch 3,
**dadurch gekennzeichnet, dass**
das Befestigungselement (62) in die weitere Ausnehmung (60) in einer Richtung (70) eingesetzt werden kann, die rechtwinklig zur Drehachse (31) des Rotors (25) verläuft.

5. Elektromotor nach Anspruch 2 bis 4,
**dadurch gekennzeichnet, dass**
der Positionierabschnitt (50) eine Nut (52) aufweist, in die ein Vorsprung (72) des Befestigungselements (62) eingreift.

6. Elektromotor nach einem der Ansprüche 2 bis 5,
**dadurch gekennzeichnet, dass**
in einer Ebene, die rechtwinklig zur Drehachse (31) des Rotors (25) verläuft, das Befestigungselement (62) U-förmig mit einem Ausschnitt (64) zur Aufnahme einer Welle (24) des Rotors (25) ausgebildet ist und einen Arretierabschnitt (74) zum Zusammenwirken mit dem Positionierabschnitt (50) aufweist.

7. Elektromotor nach einem der Ansprüche 3 bis 6,
**dadurch gekennzeichnet, dass**
der Positionierabschnitt (50) an einer Verlängerung (48) des Stators (40) ausgebildet ist, wobei die Verlängerung (48) parallel zur Längsachse (43) des Stators (40) verläuft, und dass das Befestigungselement (62) einen Vorsprung (72) aufweist, der den Arretierabschnitt (74) trägt.

8. Elektromotor nach Anspruch 7,
**dadurch gekennzeichnet, dass**
der Stator (40) zusammen mit der Verlängerung (48) einen einteiligen Spritzguss bildet.

9. Elektromotor nach einem der Ansprüche 1 bis 8,
**dadurch gekennzeichnet, dass**
das Befestigungselement (62) aus einem Federstahlblech besteht und als Stanz- oder Biegeteil ausgebildet ist.

10. Elektromotor nach einem der Ansprüche 3 bis 9,
**dadurch gekennzeichnet, dass**
das Befestigungselement (62) mit einer ersten Stirnseite (65) gegen ein Lagermittel (28) und mit seiner gegenüberliegenden zweiten Stirnseite (66) gegen eine Wand (68) des Getriebegehäuses (14) wirkt.

11. Elektromotor nach einem der Ansprüche 7 bis 10,
**dadurch gekennzeichnet, dass**
die Verlängerung (48) Anschlüsse (53 bis 55) zur elektrischen Kontaktierung von im Stator (40) befindlichen elektrischen Spulen aufweist.

12. Elektromotor nach einem der Ansprüche 1 bis 11,
**dadurch gekennzeichnet, dass**
der Elektromotor (10) Teil eines Wischermotors (100) ist.

13. Verfahren zur Montage eines Elektromotors (10) nach einem der Ansprüche 3 bis 12, wobei die Montage mindestens die folgenden Schritte umfasst:
- Montieren des Stators (40) und des Rotors (25) im Motorgehäuse (16),
- axiales Verbinden des Motorgehäuses (16) und des Getriebegehäuses (14), wobei ein Abschnitt des Rotors (25) und der Positionierabschnitt (50) des Stators (40) in das Getriebegehäuse (14) hineinragen,
- Montieren des Befestigungselements (62), wobei der Rotor (25) und der Positionierabschnitt (50) axial relativ zum Motorgehäuse (16) und zum Getriebegehäuse (14) positioniert werden.

## Revendications

1. Moteur électrique sans balai (10), ayant un carter (12) destiné à recevoir un rotor (25) supporté de façon rotative, dans un axe de rotation (31), au moyen de multiples moyens paliers (28, 30), dans lequel des éléments magnétiques (32) sont agencés sur le rotor (25), qui interagissent avec un stator (40) agencé de façon stationnaire dans le carter (12), et dans lequel le rotor (25) est positionné dans le carter (12) axialement dans la direction de l'axe de rotation (31) au moyen d'un élément de fixation (62) raccordable au carter (12), **caractérisé en ce que**
le stator (40) comprend une partie de positionnement (50) coopérant avec l'élément de fixation (62) et la partie de positionnement (50) fait axialement saillie au-delà d'un élément porteur (42) du stator (40) dans la direction de l'axe de rotation (31), lequel élément porteur (42) porte des enroulements de bobine (44), l'élément de fixation (62) servant pour le positionnement axial du rotor (25) dans le carter (12), ledit élément de fixation (62) exerçant une force axiale sur les moyens paliers (28) du rotor (25), dans lequel les moyens paliers (28) est fermement relié à un arbre (24) du rotor (25) dans la direction axiale, dans lequel l'élément de fixation (62) applique une force sur les moyens paliers (28) et donc sur le rotor (25) dans la direction de l'axe de rotation (31), dans lequel la partie de positionnement (50) interagit avec l'élément de fixation (62) afin de positionner de plus le stator (40) dans le carter (12) axialement dans la direction de l'axe de rotation (31).

2. Moteur électrique selon la revendication 1,
**caractérisé en ce que**
la partie de positionnement (50) coopère avec l'élément de fixation (62) au moyen d'une liaison ajustée en forme (76).

3. Moteur électrique selon la revendication 2,
**caractérisé en ce que**
le stator (40) est agencé dans un carter de moteur (16), **en ce que** le carter de moteur (16) peut être relié à une second côté-face (17) d'un carter d'engrenage (14) sur un premier côté-face (18), dans lequel le carter de moteur (16) forme le carter (12) conjointement avec le carter d'engrenage (14), **en ce que** le carter d'engrenage (14) comprend un évidement (58) dans lequel la partie de positionnement (50) peut être axialement insérée dans la direction de l'axe de rotation (31), et **en ce que** l'évidement (58) s'étend complètement dans une région d'un évidement supplémentaire (60) destiné à recevoir l'élément de fixation (62).

4. Moteur électrique selon la revendication 3,
**caractérisé en ce que**
l'élément de fixation (62) peut être inséré dans l'évidement supplémentaire (60) dans une direction (70) se trouvant perpendiculaire à l'axe de rotation (31) du rotor (25).

5. Moteur électrique selon les revendications 2 à 4,
**caractérisé en ce que**
la partie de positionnement (50) comprend une rainure (52), dans laquelle une saillie (72) de l'élément de fixation (62) s'engage.

6. Moteur électrique selon un des revendications 2 à 5,
**caractérisé en ce que**
dans un plan se trouvant perpendiculaire à l'axe de rotation (31) du rotor (25), l'élément de fixation (62) est de conception en forme de U avec une découpe (64) destinée à recevoir un arbre (24) du rotor (25) et comprend une section d'arrêt (74) destinée à coopérer avec la partie de positionnement (50).

7. Moteur électrique selon un des revendications 3 à 6,
**caractérisé en ce que**
la partie de positionnement (50) est formée sur une extension (48) du stator (40), **en ce que** l'extension (48) s'étend parallèlement à l'axe longitudinal (43) du stator (40), et **en ce que** l'élément de fixation (62) comprend une saillie (72) qui supporte la section d'arrêt (74).

8. Moteur électrique selon la revendication 7,
**caractérisé en ce que**
le stator (40) conjointement avec l'extension (48) forment un moulage par injection monolithique.

9. Moteur électrique selon un des revendications 1 à 8,
**caractérisé en ce que**
l'élément de fixation (62) est constitué d'une feuille d'acier à ressort et est sous forme de pièce poinçonnée ou pliée.

10. Moteur électrique selon un des revendications 3 à 9,
**caractérisé en ce que**
l'élément de fixation (62) agit contre un moyen palier (28) avec un premier côté-face (65) et avec une paroi (68) du carter d'engrenage (14) avec son second côté-face opposé (66).

11. Moteur électrique selon un des revendications 7 à 10,
**caractérisé en ce que**
l'extension (48) comprend des orifices (53 à 55) destinés à entrer en contact électrique avec des bobines électriques situées dans le stator (40).

12. Moteur électrique selon un de Les revendications 1 à 11,
**caractérisé en ce que**
le moteur électrique (10) fait partie d'un moteur d'essuie-glace (100).

13. Procédé pour le montage d'un moteur électrique (10) configuré selon l'une des revendications 3 à 12, dans lequel le montage inclut au moins les étapes suivantes :
- le montage du stator (40) et du rotor (25) dans le carter de moteur (16),
- la jonction axiale du carter de moteur (16) et du carter d'engrenage (14), dans lequel une partie du rotor (25) et la partie de positionnement (50) du stator (40) font saillie dans le carter d'engrenage (14),
- le montage de l'élément de fixation (62), dans lequel le rotor (25) et la partie de positionnement (50) sont positionnés axialement relativement au carter de moteur (16) et au carter d'engrenage (14).
